# EUROPÄISCHE PATENTSCHRIFT

(11) **EP 2 062 763 B1**
(45) Veröffentlichungstag und Bekanntmachung des Hinweises auf die Patenterteilung: **29.05.2013**
(21) Anmeldenummer: 08019214.9
(22) Anmeldetag: 03.11.2008
(51) Int. Cl.: B60H 1/34

(54) **Düse, insbesondere für ein Fahrzeug**
Nozzle, especially for a vehicle
Buse, notamment pour un véhicule

(30) Priorität: 26.11.2007 DE 102007057166
(43) Veröffentlichungstag der Anmeldung: 27.05.2009
(73) Patentinhaber: Behr GmbH & Co. KG, 70469 Stuttgart (DE)
(72) Erfinder: Benamira, Salah, 70180 Stuttgart (DE)
(74) Vertreter: Grauel, Andreas

(56) Entgegenhaltungen:
- EP-A- 1 985 482
- DE-A1- 10 207 221
- DE-A1- 10 243 974
- DE-A1-102006 049 622
- DE-U1- 29 521 232

## Beschreibung

Die Erfindung betrifft eine Düse, insbesondere für ein Fahrzeug, gemäß dem Oberbegriff des Anspruches 1.

Um Luft einem Fahrzeuginnenraum zuzuführen, sind üblicherweise eine Mehrzahl von einzelnen Düsen vorgesehen. So sind im Frontbereich eines Fahrzeuginnenraums üblicherweise Seiten- und Mitteldüsen sowie Defrost- und Fußraumdüsen angeordnet. Für die Belüftung und ggf. Temperierung des Fondbereichs sind vielfach weitere Düsen in Gestalt von Belüftungs- und Fußraumdüsen vorgesehen.

Als Düsen sind unter anderem sogenannte Komfortdüsen bekannt, bei denen ein Luftstrom im Inneren der Düse durch entsprechende Leitschaufeln, Leitflächen o.ä. mit einem Drall versetzt wird, so dass sich der Luftstrahl beim Ausströmen stark aufweitet und im Wesentlichen diffus austritt. Hierbei kann die Düse auch derart ausgestaltet sein, dass eine Wahl zwischen diffusem Ausströmen und gerichtetem Ausströmen (Spotstrahl) möglich ist. Derartige Komfortdüsen sind beispielsweise in der WO 2005 / 016673 A1 (starre Leitflächen), der DE 10 2005 054 295.6 (starre Leitschaufeln) oder der DE 10 2006 053 836.6 (bewegliche Leitschaufeln) beschrieben. Die Leitflächen bzw. -schaufeln bilden hierbei Drallerzeuger, welche einen Luftstrahl verwirbeln. Derartige Komfortdüsen sind im Frontbereich eines Fahrzeugs als Mittel- oder Seitendüsen angeordnet.

Aus DE 102 43 974 und DE 295 21232 U1 sind weitere gattungsgemäße Düsen bekannt.

Es ist Aufgabe der Erfindung, eine verbesserte Düse zu stellen.

Diese Aufgabe wird gelöst durch eine Düse mit den Merkmalen des Anspruches 1. Vorteilhafte Ausgestaltungen sind Gegenstand der Unteransprüche.

Die Erfindung betrifft eine Düse, insbesondere eine Komfortdüse, mit einer Austrittsöffnung für einen Luftstrahl, wobei die Düse eine Verstellvorrichtung zur Einstellung des Luftstrahls für einen gerichteten und einen diffusen Luftaustritt durch die Austrittsöffnung aufweist, und mit einer zweiten Austrittsöffnung, welche einen Neben-Luftaustritt bildet.

Dadurch, dass zwei Austrittsöffnungen vorgesehen sind, kann eine Austrittsöffnung der Belüftung des Frontbereichs dienen, wobei hierfür insbesondere bevorzugt eine einstellbare Aufteilung des dem Frontbereich zuzuführenden Luftstroms in einen gerichtet und einen diffus austretenden Luftstrom vorgesehen ist. Die andere, zweite Austrittsöffnung, nämlich der Neben-Luftaustritt, dient bevorzugt einer Belüftung des Fondbereichs, wofür der durch diesen Neben-Luftaustritt austretende Luftstrom erfindungsgemäß gerichtet als gebündelter Luftstrahl austritt, um den hinteren Bereich erreichen zu können. Der Luftaustritt erfolgt hierbei in einer Richtung, welche den Fahrer und Beifahrer nicht in ihrem Komfort beeinträchtigt. Je nach Austrittswinkel und Strömungsgeschwindigkeit des Luftstrahls durch die zweite Austrittsöffnung kann eine Belüftung der zweiten und/oder dritten Sitzreihe im Fahrzeug erfolgen, wobei beispielsweise auch die Geometrie des Fahrzeuginnenraums einen Einfluss auf die Reichweite des Luftstrahls hat. Somit dient die zweite Austrittsöffnung insbesondere der direkten Belüftung des Fondbereichs vom Frontbereich aus.

Eine derartige Düse ist bevorzugt in die Instrumententafel eines Fahrzeugs integriert. Insbesondere bevorzugt handelt es sich bei der Düse um eine Mitteldüse.

Erfindungsgemäß regelt mindestens eine Klappe die Luftverteilung auf den Diffus-Luftaustritt und den Neben-Luftaustritt. Hierbei versperrt die Klappe bevorzugt in ihrer einen Endstellung den Teilluftkanal zur zweiten Austrittsöffnung, also zum Neben-Luftaustritt. In ihrer anderen Endstellung versperrt die Klappe bevorzugt sowohl den Teilluftkanal zur zweiten Austrittsöffnung als auch den Teilluftkanal für einen diffusen Luftaustritt durch die erste Austrittsöffnung, wobei für ein vollständiges Verschließen des Teilluftkanals für einen diffusen Luftaustritt auch mehrere Klappen vorgesehen sein können.

Besonders bevorzugt ist die Klappe, welche den Teilluftkanal zur zweiten Austrittsöffnung und zumindest teilweise den Teilluftkanal für einen diffusen Luftaustritt durch die erste Austrittsöffnung regelt, als gekrümmte Schmetterlingsklappe ausgebildet, d.h. die Klappenflächen auf beiden Seiten der Schwenkachse sind in einem Winkel ungleich 180° zueinander angeordnet. Es sind jedoch auch andere Ausgestaltungen der Klappe möglich.

Dem Diffus-Luftaustritt durch die erste Austrittsöffnung sind bevorzugt zwei Klappen zugeordnet, wobei die Klappen auf gegenüberliegenden Seiten des Teilluftkanals für einen gerichteten Luftaustritt durch die erste Austrittsöffnung angeordnet sind.

Vorzugsweise weist die erste Austrittsöffnung mindestens einen inneren Hohlzylinder und einen äußeren Hohlzylinder auf, die konzentrisch angeordnet sind, wobei zwischen dem inneren und äußeren Hohlzylinder mindestens eine Leitfläche angeordnet ist, welche den zwischen den Hohlzylindern strömenden Luftstrom mit einem Drall beaufschlagt.

Besonders bevorzugt ist eine Zwangsleckage durch den Neben-Luftaustritt vorgesehen. Dies stellt eine ausreichende Belüftung des Fahrzeuginnenraums durch die Düse sicher.

Die zweite Austrittsöffnung der Düse ist vorzugsweise im in ein Fahrzeug eingebauten Zustand in der Instrumententafel räumlich oberhalb der ersten Austrittsöffnung angeordnet. Dabei ist insbesondere bevorzugt die Mittellängsachse der zweiten Austrittsöffnung in einem Winkel von 45° bis 90°, insbesondere von ca. 45° bis 75°, zur Mittellängsachse der ersten Austrittsöffnung angeordnet.

Im Folgenden wird die Erfindung anhand von mehreren Ausführungsbeispielen, teilweise unter Bezugnahme auf die Zeichnung, im Einzelnen erläutert.

### Es zeigen:

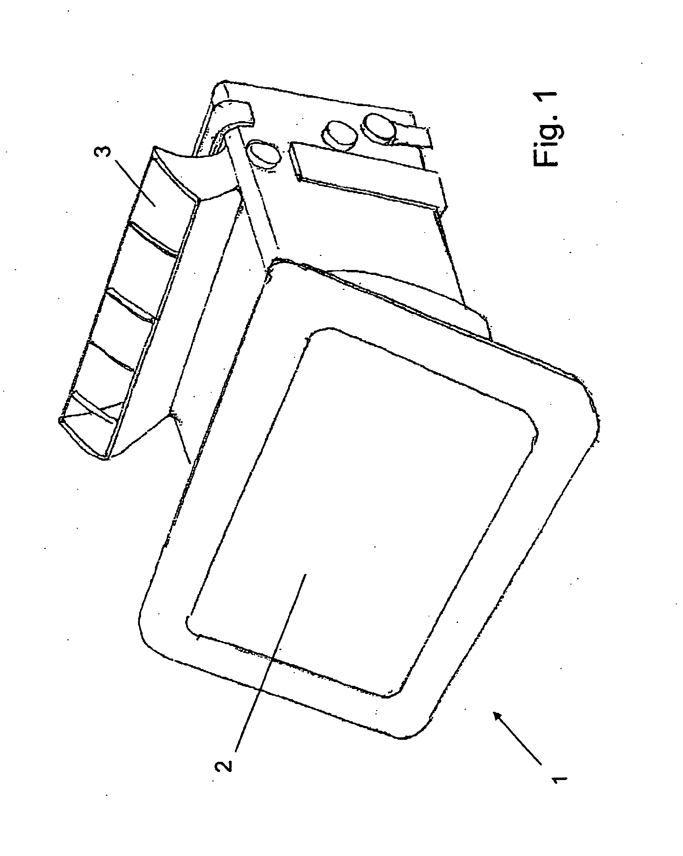

- Fig. 1: eine perspektivische Darstellung einer Düse gemäß dem ersten Ausführungsbeispiel,

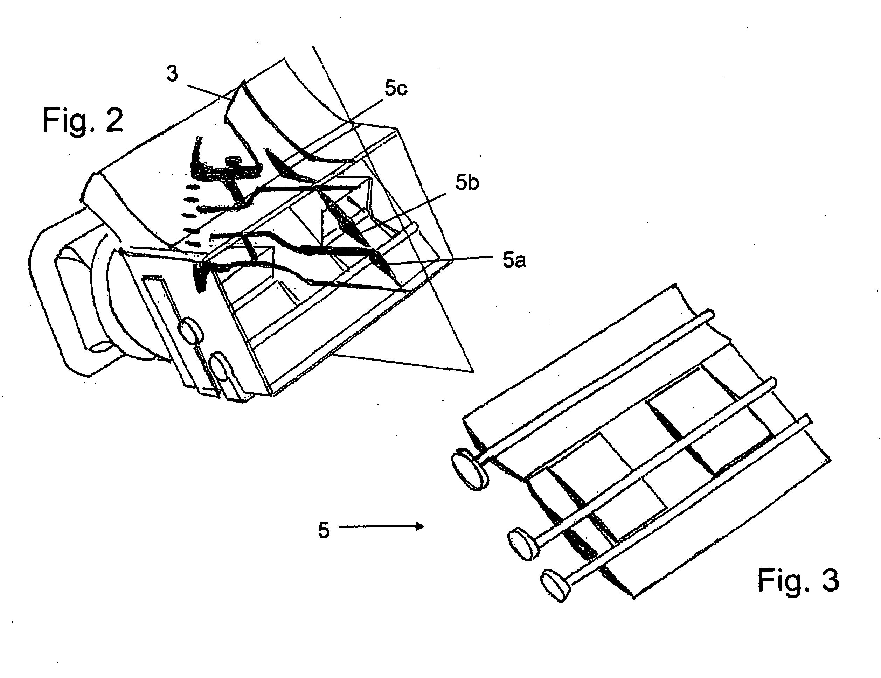

- Fig. 2: eine andere perspektivische Darstellung der Düse von Fig. 1,
- Fig. 3: eine weitere perspektivische Darstellung der Klappen der Düse von Fig. 1,
- Fig. 4: einen Schnitt durch die Düse von Fig. 1 in der Stellung "zu",
- Fig. 5: einen Schnitt durch die Düse von Fig. 1 in der Stellung "diffus + Fondbereich",
- Fig. 6: einen Schnitt durch die Düse von Fig. 1 in der Stellung "diffus",
- Fig. 7: einen Schnitt durch die Düse von Fig. 1 in der Stellung "gerichtet + diffus",
- Fig. 8: einen Schnitt durch die Düse von Fig. 1 in der Stellung "gerichtet + Fondbereich", und
- Fig. 9: einen Schnitt durch die Düse von Fig. 1 in der Stellung "gerichtet".

Im Frontbereich eines Kraftfahrzeug-Innenraums sind in die Instrumententafel integriert Düsen 1 angeordnet, wobei vorliegend eine fahrerseitige Seitendüse, eine fahrerseitige Mitteldüse, eine beifahrerseitige Mitteldüse und eine beifahrerseitige Seitendüse vorgesehen sind. Die Düsen 1 sind sogenannte Komfortdüsen, welche in Abhängigkeit der Einstellung einen gerichteten Luftstrahl (Spotstrahl) oder ein diffuses Ausströmen der Luft ermöglichen. Hierbei erfolgt der Luftaustritt durch eine erste Austrittsöffnung 2. Ferner ermöglichen sie eine direkte Luftzufuhr in den entsprechenden Fondbereich, wofür sie eine zweite Austrittsöffnung 3 aufweisen, welche räumlich oberhalb der ersten Austrittsöffnung 2 angeordnet ist. Sämtliche Düsen 1 haben einen einander entsprechenden Aufbau, welcher im Folgenden anhand des Aufbaus einer der Düsen 1 näher beschrieben ist.

Die Düse 1 ist am Ende eines Luftkanals 4 angeordnet, über welchen temperierte Luft von der Klimaanlage zuführbar ist. Zur zusätzlichen Regelung des durch die Düse 1 austretenden Luftmassenstroms sowie der Art des austretenden Luftstroms (Frontbereich gerichtet, Frontbereich diffus oder Fondbereich) ist eine Klappenanordnung 5 vorgesehen, welche vorliegend durch drei als Flügelklappen ausgebildete Klappen 5a, 5b, 5c gebildet ist.

Die Klappen der Klappenanordnung müssen nicht notwendigerweise durch mehrere einflügelige Klappen und/oder Schmetterlingsklappen ausgebildet sein, wie gemäß dem vorliegenden Ausführungsbeispiel vorgesehen. Beliebige andere Ausgestaltungen sind möglich, bspw. in Gestalt von Jalousieklappen oder geeigneter Kombinationen unterschiedlicher Klappenarten.

Im Bereich der Klappenanordnung 5 erfolgt eine Unterteilung des Luftkanals in - in Bezug auf ihre Funktion gesehen - drei Teilluftkanäle 6a, 6b, 6c. Hierbei führen die Teilluftkanäle 6a und 6b zur ersten Austrittsöffnung 2 und der dritte Teilluftkanal 6c zur zweiten Austrittsöffnung 3. Zwischen den Teilluftkanälen sind Trennwände ausgebildet.

Der erste Teilluftkanal 6a ist vorliegend als ein Kanal mit zwei nebeneinander angeordneten, kreisringförmigen Querschnitten, begrenzt durch äußere Hohlzylinder 7a und konzentrisch hierzu angeordnete innere Hohlzylinder 7b ausgebildet. In diesen kreisringförmigen Querschnitten sind Leitflächen 8 angeordnet, welche den Luftstrom mit einem Drall beaufschlagen, so dass der Luftstrom in Folge der Drallbehaftung diffus austritt. Die Ausrichtung der Leitflächen 8 in den beiden kreisringförmigen Bereichen ist entgegengesetzt, so dass ein Teil des Luftstroms mit einem in Uhrzeigersinn gerichteten Drall und der andere Teil des Luftstroms mit einem entgegen dem Uhrzeigersinn gerichteten Drall behaftet sind.

Der zweite Teilluftkanal 6b ist als Kanal mit zwei nebeneinander und etwas beabstandet voneinander angeordneten kreisförmigen Querschnitten ausgebildet, wobei die kreisförmigen Querschnitte jeweils in den kreisförmigen Querschnitten des ersten Teilluftkanals 6a angeordnet sind. Am Ende der Hohlzylinder 7a und 7b ist - angepasst an die Instrumententafel des Fahrzeugs - ein Grill 9 mit in horizontaler Richtung verlaufenden, um ihre Längsachsen verschwenkbaren Lamellen 10 angeordnet.

Der dritte Teilluftkanal 6c, welcher durch die Klappe 5c verschließbar ist, zweigt schräg nach oben von den beiden Teilluftkanälen 6a und 6b, welche vorliegend gerade und in horizontaler Richtung verlaufend weitergeführt sind, ab, wobei er optisch angepasst an der Oberseite der Instrumententafel endet (nicht dargestellt).

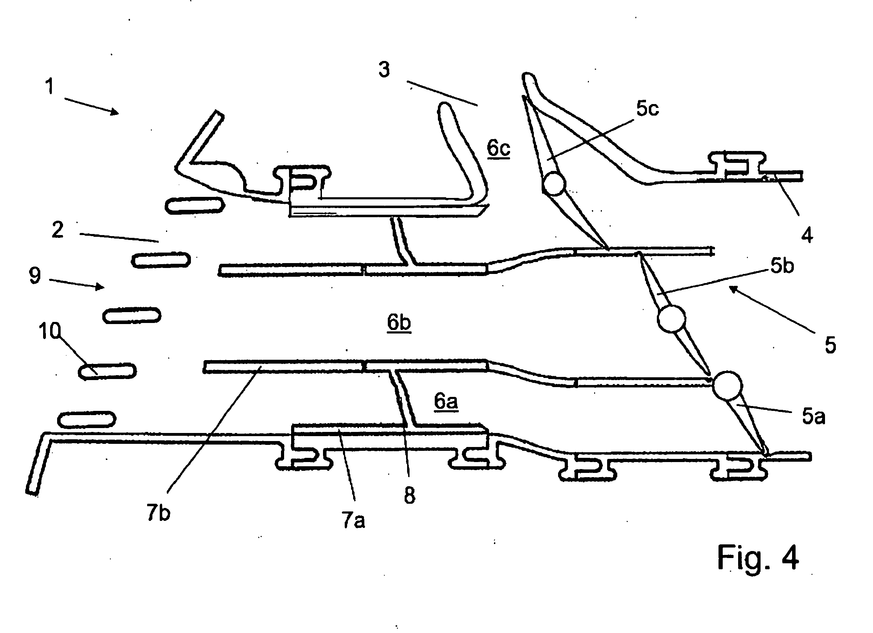

Im Folgenden wird unter Bezugnahme auf die Figuren 4 bis 9 die Funktion der Düse 1 anhand verschiedener Klappenstellungen der Klappen 5a, 5b und 5c näher erläutert.

Fig. 4 zeigt eine vollständig geschlossene Stellung der Klappenanordnung 5, d.h. es gelangt Luft weder durch die Teilluftkanäle 6a und 6b noch durch den Teilluftkanal 6c in den Fahrzeuginnenraum. Hierfür sind alle Klappen 5a, 5b, 5c vollständig geschlossen und liegen mit ihren von den Schwenkachsen beabstandeten Enden an den Wänden bzw. Trennwänden an.

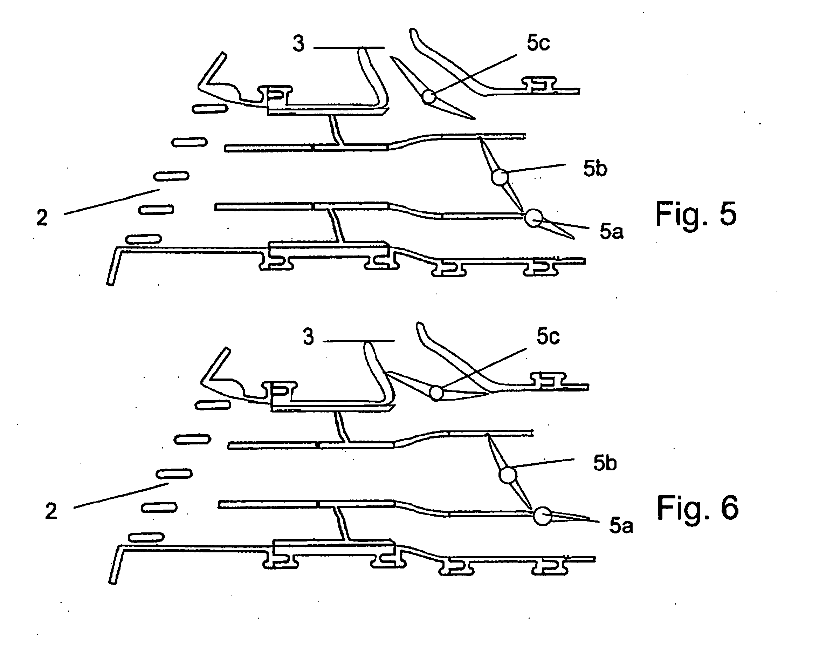

In Fig. 5 ist eine Stellung der Klappenanordnung 5 dargestellt, welche eine Luftzufuhr über den ersten Teilluftkanal 6a, also einen diffusen Luftstrom, und über den dritten Teilluftkanal 6c ermöglicht, so dass im Frontbereich ein diffuser Luftaustritt über die erste Austrittsöffnung 2 erfolgt, und über die zweite Austrittsöffnung 3 dem Fondbereich Luft vom Frontbereich aus zugeführt wird, wobei der Luftstrom entlang der Windschutzscheibe und dem Fahrzeughimmel verläuft. Hierfür ist die erste Klappe 5a teilweise geöffnet und die dritte Klappe 5c befindet sich ebenfalls in einer Zwischenstellung, so dass über die dritte Klappe 5c sowohl Luft in den ersten Teilluftkanal 6a als auch in den dritten Teilluftkanal 6c gelangt. Die zweite Klappe 5b ist vollständig geschlossen.

Fig. 6 zeigt eine Stellung der Klappenanordnung 5, in welcher ausschließlich ein diffuser Luftstrom dem Frontbereich zugeführt wird. Hierfür ist die erste Klappe 5a vollständig geöffnet und die dritte Klappe 5c befindet sich ein einer Endstellung, in welcher der dritte Teilluftkanal 6c vollständig verschlossen, der erste Teilluftkanal 6a jedoch vollständig freigegeben ist. Die zweite Klappe 5b ist vollständig geschlossen.

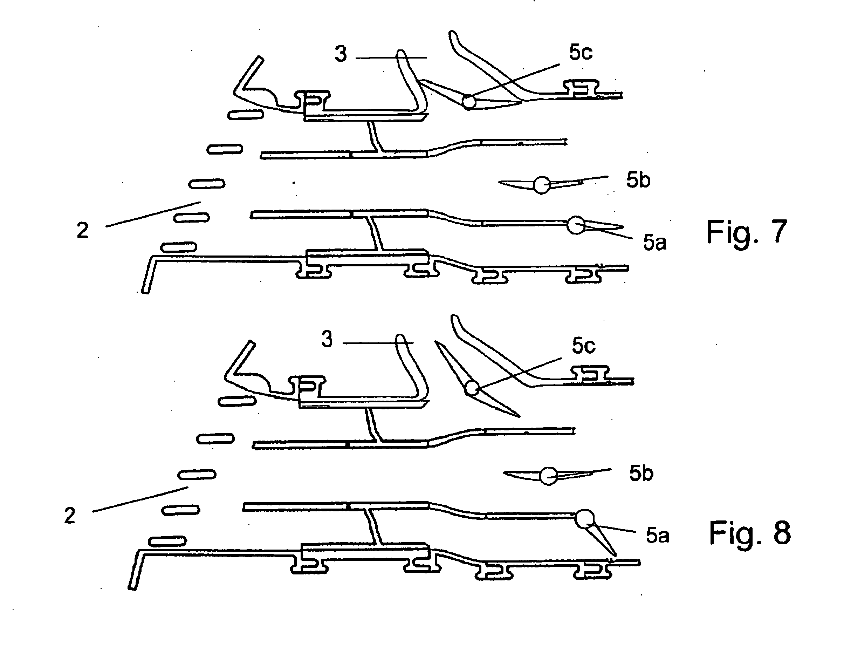

In Fig. 7 ist eine Stellung der Klappenanordnung 5 dargestellt, welche eine Luftzufuhr über den ersten Teilluftkanal 6a, also einen diffusen Luftstrom, und über den zweiten Teilluftkanal 6b ermöglicht, so dass im Frontbereich sowohl ein diffuser als auch ein gerichteter Luftaustritt über die erste Austrittsöffnung 2 erfolgt, und über die zweite Austrittsöffnung 3 dem Fondbereich keine Luft vom Frontbereich aus zugeführt wird. Hierfür ist die erste Klappe 5a vollständig geöffnet, und die dritte Klappe 5c befindet sich ebenfalls in einer Endstellung, welche den dritten Teilluftkanal 6c vollständig verschließt. Die zweite Klappe 5b ist vollständig geöffnet.

Fig. 8 zeigt eine Stellung der Klappenanordnung 5, in welcher ein gerichteter Luftstrom dem Frontbereich wie auch Luft dem Fondbereich zugeführt wird. Hierfür ist die erste Klappe 5a vollständig geschlossen, die zweite Klappe 5b ist vollständig geöffnet und die dritte Klappe 5c befindet sich ein einer Stellung, in welcher der dritte Teilluftkanal 6c im Wesentlichen freigegeben ist, wobei jedoch ein Leckageluftstrom durch einen Spalt in den zweiten Teilluftkanal 6b gelangt, so dass auch etwas Luft über den zweiten Teilluftkanal 6b in den Frontbereich gelangt.

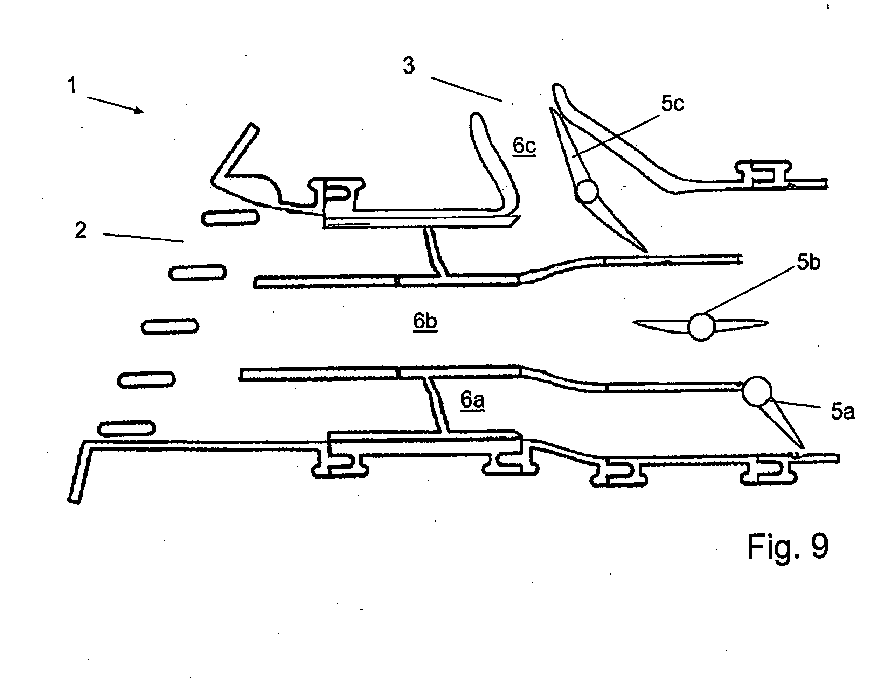

In Fig. 9 ist eine Stellung der Klappenanordnung 5 dargestellt, in welcher ausschließlich Luft über den zweiten Teilluftkanal 6b, d.h. als Spotstrahl, in den Frontbereich des Fahrzeuginnenraums gelangt. Der erste und dritte Teilluftkanal 6a bzw. 6c sind durch die Klappen 5a und 5c verschlossen.

Gemäß einem nicht in der Zeichnung dargestellten Ausführungsbeispiel, welches sofern nachfolgend nicht beschrieben dem vorigen Ausführungsbeispiel entspricht, ist eine Zwangsbelüftung vorgesehen. Hierfür ist die dritte Klappe, welche der Klappe 5c des ersten Ausführungsbeispiels entspricht, derart ausgebildet, dass der dritte Teilluftkanal zur zweiten Austrittsöffnung in jeder Klappenstellung von einem Luftstrom durchströmt wird.

Als drittes Ausführungsbeispiel, das ebenfalls nicht in der Zeichnung dargestellt ist, ist die Regelung der Klappenanordnung auch derart ausgebildet, dass ein Zustand "zu", d.h. wenn alle Teilluftkanäle verschlossen sein sollten, nicht realisiert wird, so dass stets mindestens eine der Klappen einen Spalt geöffnet ist, durch den die Zwangsbelüftung erfolgen kann. Bei der geöffneten Klappe handelt es sich vorliegend, aber nicht notwendigerweise, um die der zweiten Austrittsöffnung zugeordnete Klappe.

Gemäß einem vierten Ausführungsbeispiel sind getrennt ausgebildete Klappen für jeden der Teilluftkanäle ausgebildet, d.h. an Stelle der dritten Klappe 5c des ersten Ausführungsbeispiels sind zwei getrennt ausgebildete Klappen vorgesehen.

## Patentansprüche

1. Düse, insbesondere Komfortdüse, mit einer Austrittsöffnung (2) für einen Luftstrahl, wobei die Düse (1) eine Verstellvorrichtung zur Einstellung des Luftstrahls für einen gerichteten und einen diffusen Luftaustritt durch die Austrittsöffnung (2) aufweist, wobei die Düse (1) eine zweite Austrittsöffnung (3) aufweist, welche einen Neben-Luftaustritt bildet,
**dadurch gekennzeichnet, dass** durch die zweite Austrittsöffnung (3) ein gerichteter Luftaustritt vorgesehen ist und
mindestens eine Klappe (5c) die Luftverteilung auf den Diffus-Luftaustritt und den Neben-Luftaustritt regelt.

2. Düse nach Anspruch 1, **dadurch gekennzeichnet, dass** die Klappe (5c) als gekrümmte Schmetterlingsklappe ausgebildet ist.

3. Düse nach einem der vorhergehenden Ansprüche, **dadurch gekennzeichnet, dass** zwei Klappen (5a und 5c) dem Diffus-Luftaustritt zugeordnet sind.

4. Düse nach einem der vorhergehenden Ansprüche, **dadurch gekennzeichnet, dass** die erste Austrittsöffnung (2) mindestens einen inneren Hohlzylinder (7b) und einen äußeren Hohlzylinder (7a) aufweist, die konzentrisch angeordnet sind, wobei zwischen dem inneren und äußeren Hohlzylinder mindestens eine Leitfläche (8) angeordnet ist, welche den zwischen den Hohlzylindern strömenden Luftstrom mit einem Drall beaufschlagt.

5. Düse nach einem der vorhergehenden Ansprüche, **dadurch gekennzeichnet, dass** eine Zwangsleckage durch den Neben-Luftaustritt vorgesehen ist.

6. Düsenanordnung in einer Fahrzeuginstrumententafel, **gekennzeichnet durch** mindestens eine Düse nach einem der vorhergehenden Ansprüche.

7. Düsenanordnung nach Anspruch 6, **dadurch gekennzeichnet, dass** die zweite Austrittsöffnung im in ein Fahrzeug eingebauten Zustand der Instrumententafel räumlich oberhalb der ersten Austrittsöffnung angeordnet ist, und die Mittellängsachse der zweiten Austrittsöffnung in einem Winkel von 45° bis 90° zur Mittellängsachse der ersten Austrittsöffnung angeordnet ist.

8. Düsenanordnung nach Anspruch 6 oder 7, **dadurch gekennzeichnet, dass** die Mitteldüse eine Düse (1) mit zwei Austrittsöffnungen (2, 3) und die Seitendüsen herkömmliche Düsen, insbesondere Komfortdüsen, sind.

## Claims

1. A nozzle, in particular a comfort nozzle, comprising an outlet opening (2) for an air jet, wherein the nozzle (1) comprises an adjustment device for adjusting the air jet for a directed and a diffuse air discharge through the outlet opening (2), wherein the nozzle (1) comprises a second outlet opening (3), which forms a secondary air discharge, **characterized in that** a directed air discharge is provided through the second outlet opening (3), and at least one damper door (5c) regulates the air distribution to the diffuse air discharge and the secondary air discharge.

2. The nozzle according to claim 1, **characterized in that** the damper door (5c) is designed as a curved butterfly damper door.

3. A nozzle according to any one of the preceding claims, **characterized in that** two damper doors (5a and 5c) are associated with the diffuse air discharge.

4. A nozzle according to any one of the preceding claims, **characterized in that** the first outlet opening (2) comprises at least one inner hollow cylinder (7b) and an outer hollow cylinder (7a), which are arranged concentrically, wherein at least one guide surface (8) is arranged between the inner and outer hollow cylinders, the guide surface applying a swirl to the air current flowing between the hollow cylinders.

5. A nozzle according to any one of the preceding claims, **characterized in that** a forced leak is provided through the secondary air discharge.

6. A nozzle assembly in a vehicle instrument panel, **characterized by** at least one nozzle according to any one of the preceding claims.

7. The nozzle assembly according to claim 6, **characterized in that**, when the instrument panel is installed in a vehicle, the second outlet opening is arranged spatially above the first outlet opening, and the center longitudinal axis of the second outlet opening is arranged at an angle of 45° to 90° relative to the center longitudinal axis of the first outlet opening.

8. The nozzle assembly according to claim 6 or 7, **characterized in that** the center nozzle is a nozzle (1) having two outlet openings (2, 3) and the side nozzles are conventional nozzles, in particular comfort nozzles.

## Revendications

1. Buse, en particulier buse de confort, comprenant une ouverture de sortie (2) pour un jet d'air, où la buse (1) présente un dispositif de réglage servant à l'ajustement du jet d'air pour une sortie d'air dirigé et une sortie d'air diffus passant par l'ouverture de sortie (2), où la buse (1) présente une deuxième ouverture de sortie (3) qui forme une sortie d'air auxiliaire, **caractérisée en ce qu'**il est prévu une sortie d'air dirigé passant par la deuxième ouverture de sortie (3), et au moins un volet (5c) règle la répartition de l'air fourni à la sortie d'air diffus et à la sortie d'air auxiliaire.

2. Buse selon la revendication 1, **caractérisée en ce que** le volet (5c) est conçu comme un volet papillon incurvé.

3. Buse selon l'une ou l'autre des revendications précédentes, **caractérisée en ce que** deux volets (5a et 5c) sont associés à la sortie d'air diffus.

4. Buse selon l'une quelconque des revendications précédentes, **caractérisée en ce que** la première ouverture de sortie (2) présente au moins un cylindre creux intérieur (7b) et un cylindre creux extérieur (7a) qui sont disposés de façon concentrique, où au moins une surface déflectrice (8) est disposée entre le cylindre creux intérieur et extérieur, surface déflectrice qui, en formant un mouvement tourbillonnant, fournit le flux d'air s'écoulant entre les cylindres creux.

5. Buse selon l'une quelconque des revendications précédentes, **caractérisée en ce qu'**il est prévu une fuite forcée se produisant à travers la sortie d'air auxiliaire.

6. Agencement de buses dans un tableau de bord de véhicule, **caractérisé par** au moins une buse selon l'une quelconque des revendications précédentes.

7. Agencement de buses selon la revendication 6, **caractérisé en ce que** la deuxième ouverture de sortie, lorsque le tableau de bord est monté dans un véhicule, est disposée physiquement au-dessus de la première ouverture de sortie, et l'axe longitudinal médian de la deuxième ouverture de sortie est disposé suivant un angle de 45° à 90° par rapport à l'axe longitudinal médian de la première ouverture de sortie.

8. Agencement de buses selon la revendication 6 ou 7, **caractérisé en ce que** la buse centrale est une buse (1) comportant deux ouvertures de sortie (2, 3), les buses latérales étant des buses de type courant, en particulier des buses de confort.
